(19) Europäisches Patentamt / European Patent Office / Office européen des brevets

(11) **EP 2 648 157 A1**

(12) **EUROPEAN PATENT APPLICATION**

(43) Date of publication:
**09.10.2013 Bulletin 2013/41**

(51) Int Cl.:
*G06T 3/40* (2006.01)          *G06T 5/50* (2006.01)
*G06T 7/00* (2006.01)          *H04N 5/225* (2006.01)

(21) Application number: **12163131.1**

(22) Date of filing: **04.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Telefonaktiebolaget LM Ericsson
(PUBL)
164 83 Stockholm (SE)**

(72) Inventor: **Xu, Sanbao
226 48 LUND (SE)**

(74) Representative: **Åkerman, Mårten Lennart
Ericsson AB
Patent Unit Mobile Platforms
Nya Vattentornet
221 83 Lund (SE)**

(54) **Method and device for transforming an image**

(57)    In a first aspect, a method is provided of transforming a first image representing a view of a scenery. The method comprises obtaining the first image and obtaining a reduced first image by reducing the information density of the first image. The method further comprises obtaining an image reference for the scenery, the image reference comprising a first reference to a first reference feature at a first reference location and identifying a first image feature of the scenery at a first image location in the first reduced image. The first reference feature is matched to the first image feature, if the first reference feature matches to the first image feature, an image transformation is calculated by calculating a shift of the feature from the first reference location to the first image location. Subsequently, a transformed first image is obtained by applying the image transformation to the first image using the transform parameters estimated from the reduced images, but modified to the original scale.

400

Fig. 4

**Description**

**TECHICAL FIELD**

The various aspects relate to transformation of images or pictures, which transformed images or picture may be merged.

**BACKGROUND**

For obtaining high dynamic range images, multiple pictures may be taken. These pictures are taken with different image sensor sensitivities, different shutter timings, different diaphragm openings, other, or a combination thereof. Subsequently, these pictures are merged. As a camera may move between taking various pictures, standard one to one merging results in artefacts. The motion of the camera is counteracted through updating a picture taken.

US 2009/0067752 A1 discloses an image registration method, medium, and apparatus obtaining first and second images, generating first and second image pyramids based on the first and second images, respectively, by performing sub-sampling which reduces the length and width of each of the first and second images by half, and determining one of five directions as an optimal movement direction for a current level of the first and second image pyramids based on two images belonging to a corresponding level, updating a motion vector for the current level based on the optimal movement direction for the current level and updating a first image belonging to a level directly below the current level based on the updated motion vector for the current level, wherein the updating comprise updating a motion vector for each of a plurality of levels of the first and second image pyramids in an order from an uppermost level to a lowermost level.

**SUMMARY**

It is preferred to provide a more efficient and accurate method of transforming an image.

In a first aspect, a method is provided of transforming a first image representing a view of a scenery. The method comprises obtaining the first image and obtaining a reduced first image by reducing the information density of the first image by a pre-determined factor. The method further comprises obtaining an image reference for the scenery, the image reference comprising a first reference to a first reference feature at a first reference location and identifying at least one first image feature of the scenery at a first image location in the first reduced image. The first reference feature is matched to the first image feature and if the first reference feature matches to the first image feature, a first image transformation is calculated by calculating a shift of the feature from the first reference location to the first image location. Subsequently, a transformed first image is obtained by applying the first image transformation to at least a part of the first image. By reducing the information density of a picture taken, an automated feature detection algorithm will detect less features, reducing calculation power required for matching features and determining the transformation. Naturally, a good trade-off between is to be made: little information reduction will result in still a lot of features recognised. Too much information reduction may not leave enough features for matching and calculating the transformation.

Furthermore, by applying the transformation to the actual pictures taken, rather than to an upscaled, partially or already transformed picture and/or otherwise processed picture, the transformed picture is more accurate than when transformed in accordance with known methods.

In an embodiment of the first aspect, the first transformation is a homography transformation.

A homography transformation is a relatively simple transformation that can be scaled efficiently.

In another embodiment of the first aspect, the homography transformation is represented by the following first equation:

$$\begin{bmatrix} x_i & y_i & 1 & 0 & 0 & 0 & -x_i'x_i & -x_i'y_i & -x_i' \\ 0 & 0 & 0 & x_i & y_i & 1 & -y_i'x_i & -y_i'y_i & -y_i' \end{bmatrix} \cdot \begin{bmatrix} h_1 & h_2 & h_3 & h_4 & h_5 & h_6 & h_7 & h_8 & h_9 \end{bmatrix}^T = \begin{bmatrix} 0 \\ 0 \end{bmatrix}.$$

This may also represented by $\mathbf{A} \cdot \mathbf{h} = \mathbf{0}$, $\mathbf{h}$ being the reduced homography matrix. In this equation, x and y are coordinates of the first image location and x' and y' are coordinates of the first reference location; and calculating the first image transformation comprises calculating $\mathbf{h}$ as the eigenvector of $\mathbf{A}^T\mathbf{A}$ with the smallest eigenvalue.

In this way, the homography can be calculated in a quick and efficient way.

A further embodiment of the first aspect comprises identifying a second feature of the scenery at a second image location in the first reduced image, a third feature of the scenery at a third image location in the first reduced image, and a fourth feature of the scenery at a fourth image location in the first reduced image. In this embodiment, the image reference comprises a second reference to the second feature at a second reference location, a third reference to the third feature at a third reference location, and a fourth reference to the fourth feature at a fourth reference location; and the homography transformation is represented by the following first equation:

$$\begin{bmatrix} x_i & y_i & 1 & 0 & 0 & 0 & -x_i'x_i & -x_i'y_i & -x_i' \\ 0 & 0 & 0 & x_i & y_i & 1 & -y_i'x_i & -y_i'y_i & -y_i' \end{bmatrix} \cdot \begin{bmatrix} h_1 & h_2 & h_3 & h_4 & h_5 & h_6 & h_7 & h_8 & h_9 \end{bmatrix}^T = \begin{bmatrix} 0 \\ 0 \end{bmatrix}.$$

In this equation, x and y are coordinates of the first, the second, the third or the fourth image locations and x' and y' are coordinates of the first, the second, the third and the fourth reference locations, respectively, the coordinates of the image locations and the reference locations forming a first location pair, a second location pair, a third location pair and a fourth location pair. Furthermore, in this embodiment, calculating the first image transformation comprises: setting one of the factors h1, h2, h3, h4, h5, h6, h7, h8 or h9 to a pre-determined value; and solving the first equation using values of the first location pair, the second location pair, the third location pair and the fourth location pair.

With at least four pairs of locations of matched features, the elements of the homography matrix can be uniquely found; with more than four pairs, this will be an approximation, but it allows finding an optimal solution.

In yet another embodiment of the first aspect, obtaining the reduced first image comprises downsampling the first image in vertical and horizontal direction by a pre-determined sampling factor. The method further comprises calculating a full size homography matrix from the reduced homography matrix by the following formula, wherein k is the pre-determined sampling factor:

$$\mathbf{H}_{full} = \begin{bmatrix} h_1 & h_2 & \frac{1}{k}h_3 \\ h_4 & h_5 & \frac{1}{k}h_6 \\ k \cdot h_7 & k \cdot h_8 & h_9 \end{bmatrix}.$$

Also in this embodiment, applying the first image transformation to the first image comprises for each first image pixel location coordinate vector x calculating a first transformed pixel coordinate vector x' in accordance with the following formula:

$$\lambda \cdot \mathbf{x}' = \mathbf{H}_{full} \cdot \mathbf{x},$$

wherein

$$\mathbf{x} = \begin{bmatrix} x \\ y \\ 1 \end{bmatrix}, \qquad \mathbf{x}' = \begin{bmatrix} x' \\ y' \\ 1 \end{bmatrix};$$

and

$\lambda$ is a pre-determined scaling factor, x is an x-coordinate of a pixel of the first image, y is a y-coordinate of the pixel of the first image, x' is an x-coordinate of a pixel of the transformed first image and y' is a y-coordinate of the transformed first image.

A homography transformation calculated based on a reduced image may not always be applied one to one on the actual picture. With this embodiment, the transformation to be applied to the large image can be efficiently calculated.

$\lambda$ Is a pre-determined factor, of which the value may be arbitrarily chosen. Otherwise, the same value may be used at each operation.

Again a further embodiment of the first aspect comprises calculating a two-dimensional distance between the first image location and the first reference location; and discarding the first image location and the first reference location for calculating the first image transformation if the two-dimensional distance is above a pre-determined distance threshold.

With this embodiment, the processing power required for the matching step can be highly reduced. If a distance between the first image location and the first reference location is too high, i.e. larger than the pre-determined distance threshold, it is not very likely that both features will match. Therefore, the matching step is skipped for these features and a matching process may continue with the remaining features in the first image, and then with matching another pair of features, i.e. check whether two other features of the image reference and the first reduced image form a pair.

A second aspect provides a method of merging a first image and a second image representing a first view and a second view of the scenery, respectively. The method comprises obtaining the first image and the second image. The method further comprises obtaining a reduced first image by reducing the information density of the first image and obtaining a reduced second image by reducing the information density of the second image. The method also comprises the method according to the first aspect or embodiments thereof for transforming the first image with the reduced second image as the image reference; and merging the first transformed image and the second image. The method according to the first aspect and embodiments thereof are well suited for transforming images for later merging processes, for example to obtain HDR or high dynamic range pictures.

In a third aspect, a module is provided for transforming a first image representing a view of a scenery. The module comprises a receiver for receiving the first image;

a reference input for obtaining an image reference for the scenery, the image reference comprising a first reference to a first reference feature at a first reference location;

a processing unit. The processing unit is arranged to obtain a reduced first image by reducing the information density of the first image by a pre-determined factor; identify at least one first image feature of the scenery at a first image location in the first reduced image; match the first reference feature to the first image feature; if the first reference feature matches to the first image feature, calculate a first image transformation by calculating a shift of the feature from the first reference location to the first image location; and provide a transformed first image by applying the first image transformation to at least a part of the first image.

Such module is well suitable for carrying out the method according to the first aspect.

In a fourth aspect, a device is provided for merging a first image and a second image representing a first view and a second view of the scenery, respectively. The device comprises an image receiver for receiving the first image and the second image; a data reduction circuit for obtaining a reduced second image by reducing the information density of the second image; the module according to the third aspect for transforming the first image with the reduced second image as the image reference; and an image merging circuit for merging the first transformed image and the second image.

A fifth aspect provides a computer programme product comprising computer executable instructions for programming a computer to enable the computer to execute any of the methods according to the first aspect and embodiments thereof.

## BRIEF DESCRIPTION OF THE DRAWINGS

The various aspects and embodiments thereof will now be discussed in further detail in conjunction with Figures. In the Figures,

Figure 1:       shows an electronic camera;

Figure 2 A:    shows taking of picture of a scenery with slightly different camera angles;

Figure 2 B:    also shows taking of picture of a scenery with slightly different camera angles;

Figure 3:       shows the electronic camera in further detail;

Figure 4:       shows a flowchart;

Figure 5 A:    shows three images to be stitched to form a panoramic view image;

Figure 5 B:    shows a panoramic view image; and

Figure 6:       shows an image handling server.

## DETAILED DESCRIPTION

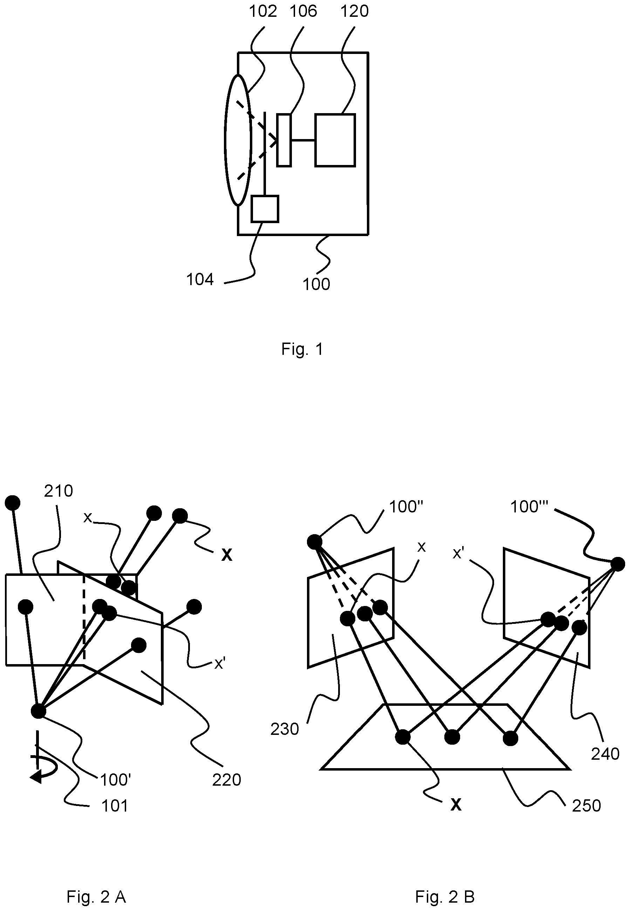

Figure 1 shows a schematic view of an electronic photo camera 100. The camera 100 comprises a lens module 102, a shutter module 104, an image capture circuit 106 and a processing unit 120. Light emitted and/or reflected by an object enters the camera via the lens module 102. The lens module 102 focuses the light received to provide a sharp image on the image capture circuit 106. To this purpose, the lens module 102 may comprise one or more lenses that in the latter case have a distance between them that may be varied to improve focus or to enlarge a part of an image. The image capture circuit 106 may be a CCD sensor, a MOS light sensitive sensor or any other light sensitive image capture circuit.

Between the lens module 102 and the image capture circuit 106 the shutter module 104 may be provided. Image capture circuits are available that are able to capture images in a fast way. However, for certain photographs, like in sports, a faster image capture time may be required that may be provided by the optional shutter module 104 for providing a short exposure time. Combined with an increased sensitivity of the image capture circuit 106, the shorter exposure time results in sharp and well exposed images of a scenery.

To provide a well balanced exposure of a scenery with a broad dynamic range of luminance, the principle of image bracketing may be used. Multiple pictures are taken from a scenery, with different shutter speed of the shutter module 104 and/or sensitivity of the image capture circuit 106. Information from the different picture is subsequently used to provide one single picture with a broad luminance range. The final picture is usually obtained by merging the pictures taken. While taking pictures, the position of the camera 100 may change. This is particularly the case when the camera 100 is held by a person, rather than being placed on a tripod. This is indicated in Figure 2 A and Figure 2 B.

In Figure 2 A, the camera 100 is placed in a first camera angle 100'. With the camera, a first picture 210 and a second picture 220 are taken for a bracketing process. Pictures are taken from a scenery comprising a point X. This results in a point x on the first picture 210 and in a point x' on the second picture 220. Between taking the first picture 210 and the second picture 220, the camera 100 is rotated slightly around an optical axis 101 of the camera 100. This results in the point x being located at a first position in the first picture 210 which is different from a second position at which the point x' is located on the second picture 220.

In Figure 2 B, the camera 100 is placed at a first camera angle 100" for taking a first picture 230. In the interval between taking the first picture 230 and taking a second picture 240, the camera 100 is moved from the first camera angle 100" to a second camera angle 100'''. In both the first camera angle 100" and the second camera angle 100''', a picture is taken from a point X in a scenery plane 250. Due to the movement of the camera 100, the point X results in a point x at a first location on the first picture 230 and a point x' at a second location on the second picture 240 and the first location is different from the second location.

Due to the different locations of the projection of the point X on different pictures taken, proper merging of the pictures taken to form one final picture is more difficult than just taking averages of pixels at the same locations or by taking pixel values from either one of the pictures for a corresponding location in the final picture. Simple merging by just taking averages at specific locations of pictures would mean that x' and x" would appear at two locations in the final picture, so the final picture would comprise two images of point X. To prevent this, the first picture 210, the second picture 220 or both have to be transformed prior to merging the picture.

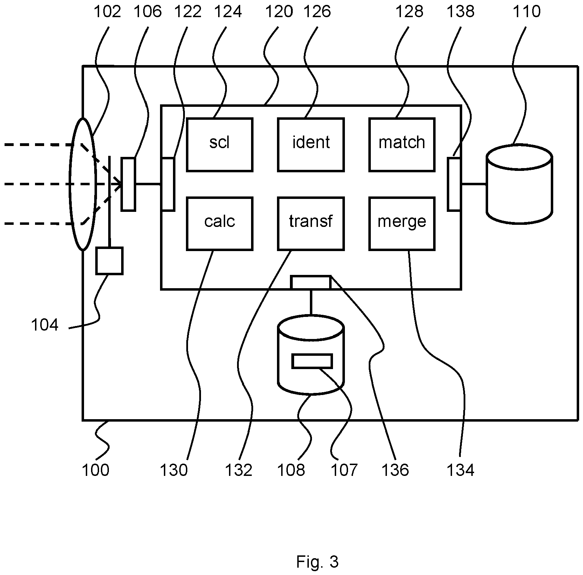

In the scenarios depicted by Figure 2 A and Figure 2 B, the transformation of point x in the first picture lets itself be translated to point x' in the second picture by means of a homography transformation. Figure 3 shows the camera 100 in further detail and in particular parts that handle transformation, merging and other processing operations that may be used for a full bracketing operation, including the merging.

The processing unit 120 comprises a scaling circuit 124, an identification circuit 126, a feature matching circuit 128, a transform calculation unit 130, a transformation circuit 132 and a merging circuit 134. The processing unit 120 further comprises a data receiving unit 122 for receiving image data, a first memory communication unit 136 for communicating with a working memory 108 and a second memory communication unit 138 for communication with a mass storage memory 110 for storing image data. The various units of the processing unit 120 can be hardwired or softwired. This means that the processing unit 120 can be manufactured to perform the various operation or that the processing unit 120 can be programmed to perform the various operations. In the latter case, the processing unit 120 can be programmed by means of computer readable and executable instructions 107 as stored in the working memory 108.

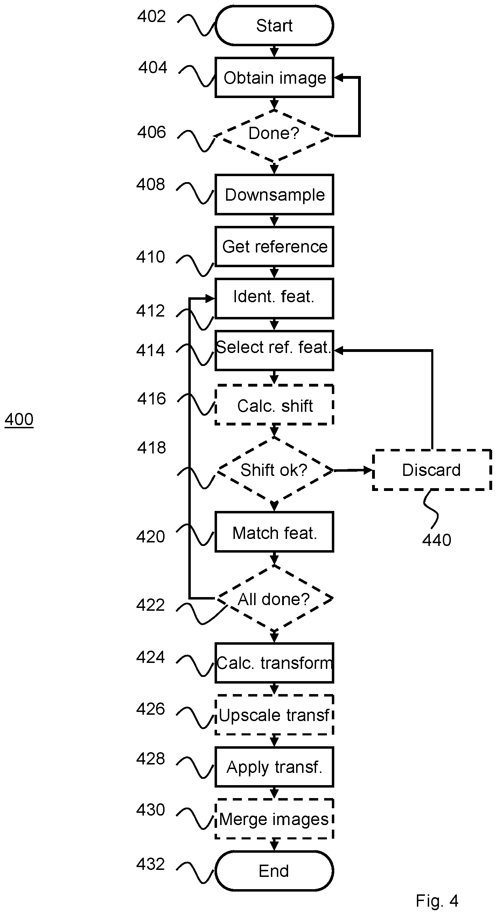

The functionality of the processing unit 120 and other components of the camera 100 will now be discussed in conjunction with a procedure depicted by a flowchart 400 provided by Figure 4. The procedure starts with start point 402. Subsequently, a picture is taken by means of the image capture circuit 106 in step 404. Alternatively, a picture is acquired in another way. In step 406, it is checked whether enough pictures have been taken to perform an intended operation. In case specifically two or more pictures have to be taken, which pictures have to be merged, further pictures are taken. Alternatively, when only the transformation of a single picture taken has to be calculated with respect to a pre-determined reference that may be available, one picture may be sufficient.

If enough pictures have been taken, the pictures taken are downsampled in step 408 to reduce the information density of the pictures. Such downsampling may be performed by replacing a two by two pixel block by one reduced pixel. The image value of the reduced pixel is the average of the values of the four pixels in the two by two pixel block, so for example of the red, green and blue values. Alternatively, a three by three, four by four or even larger pixel block may be averaged. Such way of downsampling is very simple from a processing point of view. Alterative methods of downsampling may be used as well, including weighed averaging, interpolation and the like.

After the pictures have been downsampled to obtain reduced pictures, an image reference is obtained in step 410. In a preferred embodiment where multiple pictures have been obtained, one of the pictures taken is defined as a reference image. This may be a reduced or downsampled picture. Alternatively, another image reference may be taken. In case a picture relates to map data - because it is for example an aerial picture - a transformation may be done with only reference points as an image reference, rather than a reference image. In certain regions, markers are provided on for example roads or other places in the field that have a well documented location and that can be well identified from an aerial photograph. In that case, the reference locations are matched with the landmarks or beacons to be identified in the reduced picture.

Once the image reference for the scenery depicted by the reduced picture or reduced pictures taken has been identified, features are identified in step 412. Features are identified in the image reference and in the (other) reduced picture(s) taken. Such features may be regions of corners, blob-like regions, uniform areas, other or a combination thereof. Efficient tools for identifying and describing features are available, like SIFT and SURF. With the feature identification using these tools, the features are also documented with respect to location of the feature, size, colour values and the like.

For matching, in one embodiment a feature of a reduced picture related to a picture to be transformed to the image reference is compared to each reference feature for finding a match, which reference feature is selected in step 414. Such operation may cost a lot of computing effort, even for downsampled pictures. In another embodiment, the location of a feature in the picture to be transformed is first compared to the location of a reference feature and a distance or shift is calculated in step 416. For this embodiment, a location of a feature is to be generated by the feature identification algorithm. If the distance thus calculated is above a pre-determined distance threshold, which is tested in step 416, continue the search with testing the next feature. If no distance is below the threshold, the reference feature is discarded for the matching operation in step 440 and another reference feature is selected in step 414.

With a reference feature and an image feature selected, the features are matched by comparing the features and the feature descriptors in particular in step 420. An image feature matches with a reference feature if the feature descriptors for both the reduced picture and the image reference are very close to or equal to one another and have a difference within a pre-determined feature difference boundary. Such descriptor can be location, colour, hue, size of the feature, shape of the feature, other or a combination thereof. Matched features and in particular their location in the image reference and the reduced picture to be transformed are coupled and store for later use.

In step 422, it is tested whether all features identified in the reduced picture of the picture to be transformed have been matched or at least have been assessed for matched for matching. If not, the process branches back to step 412. Alternatively or additionally, it is checked whether all reduced images have been processed. If all features and/or pictures have been assessed and at least some pairs of reference features and image features have been set, the process continues to step 424 for calculating a transformation that the image has to undergo to fit with its identified features to the image reference and the reference features with which the identified features have been matched.

Referring to Figure 2 A and by taking a reduced version of first picture 210 as the reference image, this means that a transformation is calculated from the point identified with x' to the point identified with x in the second picture 220. Both represent the point X in the scenery from which a photograph is taken and assumed to have been matched in a pair. In particular this transform, with different image locations representing a picture of the point X of the scenery, can be represented by a homography transform. This is also the case for the scenario depicted by Figure 2 B.

A real life situation is usually not this ideal, but can be well approximated by both scenario's. Therefore, factors are calculated for performing a homography transformation. A homography transformation is represented as a 3 by 3 matrix H in homogeneous coordinates. Assuming that x in the reduced version of the first picture 210 and x' in the reduced version of the second picture 220 are a pair of matched point and $\lambda$ is an arbitrary or pre-determined scale factor, the homography transformation is represented by:

$\lambda \cdot \mathbf{x'} = \mathbf{H}_{3x3} \cdot \mathbf{x}$,

which can also be represented as:

$$\lambda \begin{bmatrix} x' \\ y' \\ 1 \end{bmatrix} = \begin{bmatrix} h_1 & h_2 & h_3 \\ h_4 & h_5 & h_6 \\ h_7 & h_8 & h_9 \end{bmatrix} \begin{bmatrix} x \\ y \\ 1 \end{bmatrix}.$$

By eliminating the scale factor $\lambda$, a pair of matched points gives two equations:

$$\begin{bmatrix} x_i & y_i & 1 & 0 & 0 & 0 & -x_i'x_i & -x_i'y_i & -x_i' \\ 0 & 0 & 0 & x_i & y_i & 1 & -y_i'x_i & -y_i'y_i & -y_i' \end{bmatrix} \cdot \begin{bmatrix} h_1 & h_2 & h_3 & h_4 & h_5 & h_6 & h_7 & h_8 & h_9 \end{bmatrix}^T = \begin{bmatrix} 0 \\ 0 \end{bmatrix}.$$

With n pairs of matched points, this yields:

**A·h=0**

In which A is a 2n x 9 matrix containing the coordinates of the matched points and h is a 9x1 column vector of the 3x3 homography matrix H. This is a standard homogeneous equation system, which can be solved by established methods in linear algebra. In particular, this equation system can be regarded as a least squares problem with the objective to minimise $\| Ah\text{-}0 \|^2$. As a solution to the equation system, h is given by SVD as the eigenvector of **A$^\text{T}$A.**

Although there are nine unknowns in the two equations, being the nine elements of the matrix H, there are only eight degrees of freedom, because the coordinates are homogeneous. Hence, it is possible to set one of the elements to 1 - or another arbitrary or pre-determined value. With eight unknowns, at least four pairs of matched point are needed to uniquely solve the elements of the homography matrix H. In real life situations, there will be significantly more than four feature pairs detected and matched, which means the least squares problem is to be solved. This allows the best approximate values to be calculated.

Having calculated the transformation and the elements of the homography matrix in particular, the procedure continues to step 426 for upscaling the transform. Because the transformation has been calculated with data using reduced pictures rather than the actual picture taken, the transformation calculated has to be upscaled. In the scenario already discussed where the picture taken has been downscaled in horizontal as well as vertical direction by a factor 2, the relationship between the x in the first picture 210, x' in the second picture 220 and the calculated homography matrix H is:

$$\lambda \begin{bmatrix} 2x' \\ 2y' \\ 1 \end{bmatrix} = \begin{bmatrix} h_1 & h_2 & h_3 \\ h_4 & h_5 & h_6 \\ h_7 & h_8 & h_9 \end{bmatrix} \begin{bmatrix} 2x \\ 2y \\ 1 \end{bmatrix},$$

Which can be translated to:

$$\begin{bmatrix} x_i & y_i & 1 & 0 & 0 & 0 & -x_i'x_i & -x_i'y_i & -x_i' \\ 0 & 0 & 0 & x_i & y_i & 1 & -y_i'x_i & -y_i'y_i & -y_i' \end{bmatrix} \cdot \begin{bmatrix} h_1 & h_2 & \frac{1}{2}h_3 & h_4 & h_5 & \frac{1}{2}h_6 & 2h_7 & 2h_8 & h_9 \end{bmatrix}^\text{T} = \begin{bmatrix} 0 \\ 0 \end{bmatrix}.$$

This equation yield the following relation between the homography transformation matrix H$_\text{full}$ for transformation of the actual picture taken and the elements of the homography matrix calculated on the basis of the reduced pictures:

$$\mathbf{H}_{full} = \begin{bmatrix} h_1 & h_2 & \frac{1}{2}h_3 \\ h_4 & h_5 & \frac{1}{2}h_6 \\ 2h_7 & 2h_8 & h_9 \end{bmatrix}$$

Having upscaled the transformation and in this embodiment having in particular upscaled the homography matrix in step 426, pictures taken and in case of merging, in particular pictures that have not been set as reference, are transformed in step 428. The transformation is in this embodiment a homography transform and the input and output locations are locations of pixels with a pixel colour value like an RGB value.

In an embodiment where pictures are to be merged, for example to an HDR image (high dynamic range image), the procedure continues to a merging step 430. At the end, the procedure ends in a terminator 432.

The various steps of the flowchart 400 are performed by the circuits of the processing unit 120. In particular, the scaling circuit 124 is arranged for scaling of pictures, including upscaling and downscaling. The identification circuit 126 is arranged for identifying features in image references and images, either full-size or downsized. The feature matching circuit 128 is arranged for matching identified features from a picture feature to a reference feature.

The transform calculation circuit 130 is arranged for calculating an image transformation based on matched features and in particular for calculating factors for a homography transform. However, the transform calculation circuit 130 may also be arranged to perform other types of image transforms for aligning features by programming the processing unit 120. The transformation circuit 132 is arranged for transforming images in accordance with a transformation calculated by the transform calculation circuit 130.

The merging circuit 134 is arranged for merging two or more pictures to one final picture. This may be done in many ways: by simply taking averages of pixel values, by taking weighed averages, by taking colour values of a pixel of only one of the pictures, interpolation, extrapolation, other, or a combination thereof.

Thus far, merging of pictures has been discussed for the purpose of obtaining high dynamic range images. For that purpose, images are fully or at least for a very substantial part of their area merged with other images. However, the procedure presented by means of the flowchart 400 with all its variations can also be used for stitching of images to form a broad picture that provides a panoramic view.

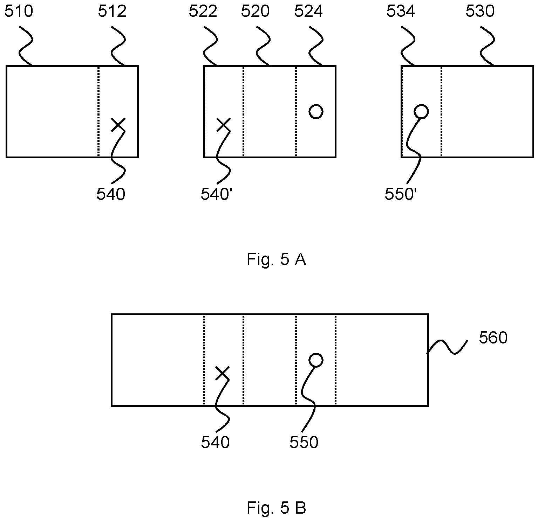

For stitching, the procedure depicted by the flowchart 400 may be applied to full images and/or to only a part thereof. Figure 5 A shows a first picture 510, a second picture 520 and a third picture 530. Each of the three pictures depicts a part of a broad panoramic scenery, with small overlapping regions comprising substantially the same visual information.

The first picture 510 comprises a first right region 512 comprising substantially the same visual information as a second left region 522 of the second picture 520. The second picture 520 also comprises a second right region 524 comprising substantially the same visual information as a third left region 534. The first right region 512 shows a first feature at a first location 540 and the second left region 522 shows the first feature at a second location 540'. The second right region 524 shows a second feature at a third location 550 and the third left region shows the second feature at a fourth location 550'.

To provide a full panoramic image 560 as depicted by Figure 5 B, the operations of feature detection, feature matching, calculation of transformation and transformation are also applied to the second picture 520, with the first picture 510 as reference. The first feature at the first location 540 and the second location 540' may be used to calculate the transformation. These steps may be applied to the whole area of the second picture 520. Alternatively, these steps are only applied to the second left region 522. Preferably, in combination with the latter alternative, transient effects between the second left region 522 and the rest of the second picture 520 are prevented as much as possible by smoothing measures like interpolation.

In one embodiment, the full second left region 522 is submitted to steps as depicted by the flowchart 400 of Figure 4 and directly right to the second left region 522, the image data is over a pre-determined range - for example the width of the second left region 522 - interpolated between the second left region 522 and the rest of the second picture 520. With interpolated is meant that data is less and less transformed compared to the full transformation of the second left region 522. The transition may be linear, quadratic, other, or a combination thereof. In another embodiment, the transition already starts in the second left region 522. In another embodiment, data in the second picture 520 is not transformed outside the second left region 522.

Subsequently, the first picture 510 and the second picture 520 are merged. For merging the second picture 520 with the third picture 530, the same procedure may be followed. In this way, the fully or partially transformed third picture 530 is merged with the first picture 510 and the second picture 520 to create the full panoramic image 560.

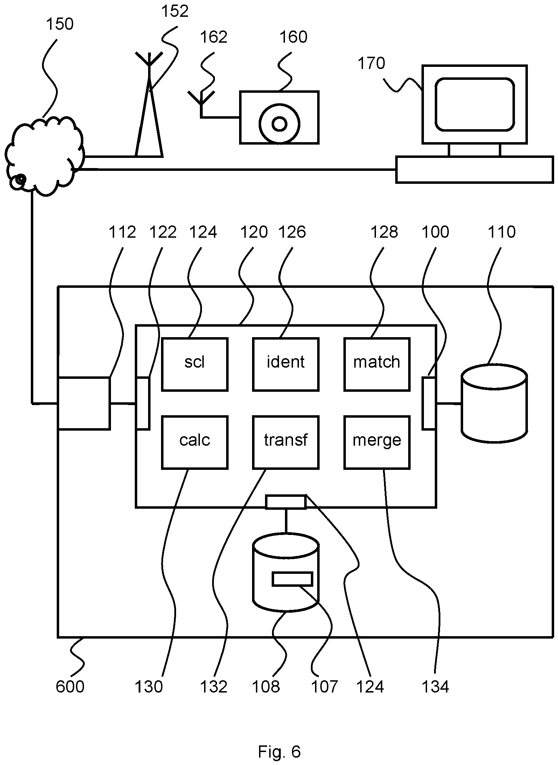

Thus far, the device in which the procedure depicted by the flowchart 400 of Figure 4 and variations thereof are carried out has been presented as the camera 100 shown by Figure 1, and variations thereof. The procedure may also be carried out remotely from a location where the picture is taken and/or where the picture has been stored. Figure 6 shows an image handling server 600. The image handling server comprises the processing unit 120 of the camera 100 (Figure 1), arranged in the same way as in the camera 100 - and arranged to be configured differently, for example for calculating other transformation than a homography transformation. In such case, the processing unit 120 can be programmed by means of computer readable and executable instructions 107 as stored in a working memory 108.

The image handling server 600 further comprises a server network interface 112 to communicate with a mobile data transmission base station 152 and a personal computer 170 via a network 150. Figure 6 further shows a further electronic camera 160 comprising a transceiver unit 162 for communicating with the image handling server via the mobile data transmission base station 152. The further electronic camera 160 is arranged to send picture taken by and stored on the further electronic camera 160 to the image handling server 600 for transformation and, in case desired, merging of pictures. The resulting picture may be stored in the mass storage memory 110 of the image handling server 600 or sent back to the further electronic camera 160. Communication between the image handling server 600 and the personal computer 170 is done in basically the same way as the personal computer 170 is arranged to send picture stored in the personal computer 170 to the image handling server 600 for transformation and, in case desired, merging of pictures. The resulting picture may be stored in the mass storage memory 110 of the image handling server 600 or sent back to the personal computer 170.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa. When data is being referred to as audiovisual data, it can represent audio only, video only or still pictures only or a combination thereof, unless specifically indicated otherwise in the description of the embodiments.

In the description above, it will be understood that when an element such as layer, region or substrate is referred to as being "on", "onto" or "connected to" another element, the element is either directly on or connected to the other element, or intervening elements may also be present.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

**Claims**

1. Method (400) of transforming a first image representing a view of a scenery, comprising:

   - Obtaining (404) the first image;
   - Obtaining (408) a reduced first image by reducing the information density of the first image by a pre-determined factor;
   - Obtaining (410) an image reference for the scenery, the image reference comprising a first reference to a first reference feature at a first reference location;
   - Identifying (412) at least one first image feature of the scenery at a first image location in the first reduced image;
   - Matching (420) the first reference feature to the first image feature;
   - If the first reference feature matches to the first image feature, calculating (424) a first image transformation by calculating a shift of the feature from the first reference location to the first image location; and
   - Obtaining (428) a transformed first image by applying the first image transformation to at least a part of the first image.

2. Method (400) according to any of the preceding claims, wherein the first transformation is a homography transformation.

3. Method (400) according to claim 2, wherein the homography transformation is represented by the following first equation:

$$\begin{bmatrix} x_i & y_i & 1 & 0 & 0 & 0 & -x_i^{'}x_i & -x_i^{'}y_i & -x_i^{'} \\ 0 & 0 & 0 & x_i & y_i & 1 & -y_i^{'}x_i & -y_i^{'}y_i & -y_i^{'} \end{bmatrix} \cdot \begin{bmatrix} h_1 & h_2 & h_3 & h_4 & h_5 & h_6 & h_7 & h_8 & h_9 \end{bmatrix}^T = \begin{bmatrix} 0 \\ 0 \end{bmatrix}.$$

Also represented by **A**. **h = 0, h** being the reduced homography matrix, wherein:

   - Wherein x and y are coordinates of the first image location and x' and y' are coordinates of the first reference location; and
   - Wherein calculating the first image transformation comprises calculating **h** as the eigenvector of $\mathbf{A}^T\mathbf{A}$ with the smallest eigenvalue.

4. Method (400) according to claim 2 or 3, further comprising identifying a second feature of the scenery at a second image location in the first reduced image, a third feature of the scenery at a third image location in the first reduced image, and a fourth feature of the scenery at a fourth image location in the first reduced image, wherein:

- the image reference comprises a second reference to the second feature at a second reference location, a third reference to the third feature at a third reference location, and a fourth reference to the fourth feature at a fourth reference location;
- the homography transformation is represented by the following first equation:

$$\begin{bmatrix} x_i & y_i & 1 & 0 & 0 & 0 & -x_i'x_i & -x_i'y_i & -x_i' \\ 0 & 0 & 0 & x_i & y_i & 1 & -y_i'x_i & -y_i'y_i & -y_i' \end{bmatrix} \cdot \begin{bmatrix} h_1 & h_2 & h_3 & h_4 & h_5 & h_6 & h_7 & h_8 & h_9 \end{bmatrix}^T = \begin{bmatrix} 0 \\ 0 \end{bmatrix}.$$

Wherein x and y are coordinates of the first, the second, the third or the fourth image locations and x' and y' are coordinates of the first, the second, the third and the fourth reference locations, respectively, the coordinates of the image locations and the reference locations forming a first location pair, a second location pair, a third location pair and a fourth location pair; and
- Wherein calculating (424) the first image transformation comprises:
- Setting one of the factors h1, h2, h3, h4, h5, h6, h7, h8 or h9 to a pre-determined value; and
- Solving the first equation using values of the first location pair, the second location pair, the third location pair and the fourth location pair.

5. Method (400) according to claim 3 or 4, wherein obtaining (404) the reduced first image comprises downsampling the first image in vertical and horizontal direction by a pre-determined sampling factor, the method further comprising:

- calculating (424) a full size homography matrix from the reduced homography matrix by the following formula, wherein k is the pre-determined sampling factor:

$$\mathbf{H}_{full} = \begin{bmatrix} h_1 & h_2 & \frac{1}{k}h_3 \\ h_4 & h_5 & \frac{1}{k}h_6 \\ k \cdot h_7 & k \cdot h_8 & h_9 \end{bmatrix}.$$

and wherein:
- applying (428) the first image transformation to the first image comprises for each first image pixel location coordinate vector x calculating a first transformed pixel coordinate vector x' in accordance with the following formula:

$$\lambda \cdot \mathbf{x}' = \mathbf{H}_{full} \cdot \mathbf{x}$$

-

$$\mathbf{x} = \begin{bmatrix} x \\ y \\ 1 \end{bmatrix} \quad \text{and} \quad \mathbf{x}' = \begin{bmatrix} x' \\ y' \\ 1 \end{bmatrix};$$

and
- λ is a pre-determined scaling factor, x is an x-coordinate of a pixel of the first image, y is a y-coordinate of the pixel of the first image, x' is an x-coordinate of a pixel of the transformed first image and y' is a y-coordinate of the transformed first image.

6. Method (400) according to any of the claims 1 to 5, comprising:

   - Calculating (416) a two-dimensional distance between the first image location and the first reference location; and
   - Discarding (440) the first image location if the two-dimensional distance is above a pre-determined distance threshold; Discarding the reference location if no distance from the first image is below the threshold.

7. Method (400) of merging a first image and a second image representing a first view and a second view of the scenery, respectively, comprising:

   - Obtaining (404) the first image and the second image;
   - Obtaining (408) a reduced first image by reducing the information density of the first image;
   - Obtaining (408) a reduced second image by reducing the information density of the second image;
   - The method (400) according to any of the claims 1 to 6 for transforming the first image with the reduced second image as the image reference; and
   - Merging (430) the first transformed image and the second image.

8. Method (400) of merging a first image and a second image representing a first view and a second view of the scenery, respectively, comprising:

   - Obtaining (404) the first image and the second image;
   - Obtaining (408) a reduced first image by reducing the information density of the first image;
   - Obtaining (408) a reduced second image by reducing the information density of the second image;
   - Calculating (410) a reduced average image by averaging image values of the first image and the second image on a per-location basis;
   - The method (400) according to any of the claims 1 to 6 for transforming the first image with the reduced average image as the image reference;
   - The method (400) according to any of the claims 1 to 6 for transforming the second image with the reduced average image as the image reference; and
   - Merging (430) the transformed first image and the transformed second image.

9. Module (120) for transforming a first image representing a view of a scenery, comprising:

   - A receiver (122) for receiving the first image;
   - A reference input (124) for obtaining an image reference for the scenery, the image reference comprising a first reference to a first reference feature at a first reference location;
   - A processing (120) unit arranged to:
   - Obtain a reduced first image (124) by reducing the information density of the first image by a pre-determined factor;
   - Identify at least one first image (126) feature of the scenery at a first image location in the first reduced image;
   - Match (128) the first reference feature to the first image feature;
   - If the first reference feature matches to the first image feature, calculate (130) a first image transformation by calculating a shift of the feature from the first reference location to the first image location; and
   - Provide (132) a transformed first image by applying the first image transformation to at least a part of the first image.

10. Device (100) for merging a first image and a second image representing a first view and a second view of the scenery, respectively, the device comprising:

    - An image receiver (106, 112) for receiving the first image and the second image;
    - A data reduction circuit (124) for obtaining a reduced second image by reducing the information density of the second image;
    - The module (120) according to claim 9 for transforming the first image with the reduced second image as the image reference; and
    - An image merging circuit (134) for merging the first transformed image and the second image.

**11.** Device (100) according to claim 10, wherein the image receiver comprises a camera (102, 106) comprising a photosensitive circuit (106).

**12.** Device (100) according to claim 10, wherein the image receiver comprises a network communication module (112) for receiving the first image from an image capturing device over a network connection.

**13.** Computer programme product (107) comprising computer executable instructions (107) for programming a computer to enable the computer to execute any of the methods according to any of the claims 1 to 8.

Fig. 1

Fig. 2 A

Fig. 2 B

Fig. 3

402 — Start

404 — Obtain image

406 — Done?

408 — Downsample

410 — Get reference

412 — Ident. feat.

414 — Select ref. feat.

416 — Calc. shift

418 — Shift ok?

Discard

440

420 — Match feat.

422 — All done?

424 — Calc. transform

426 — Upscale transf.

428 — Apply transf.

430 — Merge images

432 — End

400

Fig. 4

EP 2 648 157 A1

Fig. 5 A

Fig. 5 B

16

EP 2 648 157 A1

Fig. 6

17

Europäisches
Patentamt

European
Patent Office

Office européen
des brevets

# EUROPEAN SEARCH REPORT

Application Number

EP 12 16 3131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/183229 A1 (RUZON MARK A [US] ET AL) 22 July 2010 (2010-07-22)<br>* paragraph [0040] *<br>* paragraph [0043] *<br>* paragraph [0003] *<br>* paragraph [0047] *<br>* figure 2 *<br>* figure 3 *<br>----- | 1-6,9,13 | INV.<br>G06T3/40<br>G06T5/50<br>G06T7/00<br>H04N5/225 |
| X | WO 2007/015374 A2 (CASIO COMPUTER CO LTD [JP]; MATSUI SHINICHI; HAMADA AKIRA) 8 February 2007 (2007-02-08)<br>* the whole document *<br>----- | 1-6,9,13 | |
| A | US 6 456 731 B1 (CHIBA NAOKI [JP] ET AL) 24 September 2002 (2002-09-24)<br>* the whole document *<br>----- | 1-6,9,13 | |
| A | US 2002/109833 A1 (CHIBA NAOKI [JP]) 15 August 2002 (2002-08-15)<br>* the whole document *<br>----- | 1-6,9,13 | |
| A | WO 99/06943 A1 (SARNOFF CORP [US]) 11 February 1999 (1999-02-11)<br>* the whole document *<br>----- | 1-6,9,13 | TECHNICAL FIELDS SEARCHED (IPC)<br><br>G06T |
| A | EP 1 873 717 B1 (THOMSON LICENSING [FR]) 26 August 2009 (2009-08-26)<br>* the whole document *<br>----- | 1-6,9,13 | |
| A | EP 1 873 715 A1 (THOMSON LICENSING [FR]) 2 January 2008 (2008-01-02)<br>* the whole document *<br>----- | 1-6,9,13 | |
| X | US 6 717 608 B1 (MANCUSO MASSIMO [IT] ET AL) 6 April 2004 (2004-04-06)<br>* abstract *<br>* Section C.1 *<br>----- | 7,8,<br>10-12 | |

-/--

The present search report has been drawn up for all claims

| Place of search | Date of completion of the search | Examiner |
|---|---|---|
| Munich | 2 November 2012 | Leclercq, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 12 16 3131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 771 304 B1 (MANCUSO MASSIMO [IT] ET AL) 3 August 2004 (2004-08-03) * the whole document * | 7,8, 10-12 | |
| Y | WO 2009/055913 A1 (CEDARA SOFTWARE CORP [CA]; ACCOMAZZI VITTORIO [CA]; YU SONGYANG [CA];) 7 May 2009 (2009-05-07) * the whole document * | 7,8, 10-12 | |
| Y | WO 2009/064513 A1 (SONY ERICSSON MOBILE COMM AB [SE]; CAMP WILLIAM O JR [US]; KOKES MARK) 22 May 2009 (2009-05-22) * the whole document * | 7,8, 10-12 | |
| Y | US 2010/097444 A1 (LABLANS PETER [US]) 22 April 2010 (2010-04-22) * the whole document * | 7,8, 10-12 | |
| A | WO 2008/073854 A1 (ADOBE SYSTEMS INC [US]; CHIEN JEN-CHAN [US]; JIN HAILIN [US]) 19 June 2008 (2008-06-19) * the whole document * | 7,8, 10-12 | TECHNICAL FIELDS SEARCHED (IPC) |

The present search report has been drawn up for all claims

| Place of search | Date of completion of the search | Examiner |
|---|---|---|
| Munich | 2 November 2012 | Leclercq, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

Europäisches
Patentamt

European
Patent Office

Office européen
des brevets

Application Number

EP 12 16 3131

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 12 16 3131

The Search Division considers that the present European patent application does not comply with the
requirements of unity of invention and relates to several inventions or groups of inventions, namely:

```
    1. claims: 1-6, 9, 13

            Method and module of tranforming the geometry of an image
                       ---

    2. claims: 7, 8, 10-12

            Method and module of merging two images of the same scenery
                       ---
```

## ANNEX TO THE EUROPEAN SEARCH REPORT
## ON EUROPEAN PATENT APPLICATION NO.

EP 12 16 3131

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2012

| Patent document cited in search report | | Publication date | Patent family member(s) | | Publication date |
|---|---|---|---|---|---|
| US 2010183229 | A1 | 22-07-2010 | CN | 102341813 A | 01-02-2012 |
| | | | EP | 2387770 A1 | 23-11-2011 |
| | | | JP | 2012515405 A | 05-07-2012 |
| | | | US | 2010183229 A1 | 22-07-2010 |
| | | | WO | 2010083420 A1 | 22-07-2010 |
| WO 2007015374 | A2 | 08-02-2007 | CN | 101208721 A | 25-06-2008 |
| | | | EP | 1932114 A2 | 18-06-2008 |
| | | | JP | 4595733 B2 | 08-12-2010 |
| | | | JP | 2007041752 A | 15-02-2007 |
| | | | KR | 20080016605 A | 21-02-2008 |
| | | | US | 2007031004 A1 | 08-02-2007 |
| | | | WO | 2007015374 A2 | 08-02-2007 |
| US 6456731 | B1 | 24-09-2002 | JP | 3435084 B2 | 11-08-2003 |
| | | | JP | 11339021 A | 10-12-1999 |
| | | | US | 6456731 B1 | 24-09-2002 |
| | | | US | 2003058945 A1 | 27-03-2003 |
| US 2002109833 | A1 | 15-08-2002 | JP | 3557168 B2 | 25-08-2004 |
| | | | JP | 2002163647 A | 07-06-2002 |
| | | | US | 2002109833 A1 | 15-08-2002 |
| WO 9906943 | A1 | 11-02-1999 | EP | 1032917 A1 | 06-09-2000 |
| | | | US | 6078701 A | 20-06-2000 |
| | | | WO | 9906943 A1 | 11-02-1999 |
| EP 1873717 | B1 | 26-08-2009 | NONE | | |
| EP 1873715 | A1 | 02-01-2008 | NONE | | |
| US 6717608 | B1 | 06-04-2004 | NONE | | |
| US 6771304 | B1 | 03-08-2004 | NONE | | |
| WO 2009055913 | A1 | 07-05-2009 | NONE | | |
| WO 2009064513 | A1 | 22-05-2009 | EP | 2215828 A1 | 11-08-2010 |
| | | | US | 2009128644 A1 | 21-05-2009 |
| | | | WO | 2009064513 A1 | 22-05-2009 |
| US 2010097444 | A1 | 22-04-2010 | NONE | | |
| WO 2008073854 | A1 | 19-06-2008 | CN | 101595494 A | 02-12-2009 |
| | | | US | 2008144932 A1 | 19-06-2008 |
| | | | WO | 2008073854 A1 | 19-06-2008 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 12 16 3131

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2012

| Patent document cited in search report | Publication date | Patent family member(s) | Publication date |
|---|---|---|---|
| | | | |

For more details about this annex : see Official Journal of the European Patent Office, No. 12/82

**REFERENCES CITED IN THE DESCRIPTION**

**Patent documents cited in the description**

• US 20090067752 A1